# EUROPÄISCHE PATENTSCHRIFT

(11) **EP 0 571 412 B1**
(45) Veröffentlichungstag und Bekanntmachung des Hinweises auf die Patenterteilung: **27.05.1998**
(21) Anmeldenummer: 92903587.1
(22) Anmeldetag: 03.02.1992
(51) Int. Cl.: H01C 7/02, G01K 7/18

(54) **HOCHTEMPERATUR-PLATINMETALL-TEMPERATURSENSOR**
HIGH TEMPERATURE SENSOR MADE OF METAL OF THE PLATINUM GROUP
CAPTEUR EN METAL DU GROUPE DU PLATINE POUR HAUTES TEMPERATURES

(30) Priorität: 15.02.1991 EP 91102184
(43) Veröffentlichungstag der Anmeldung: 01.12.1993
(73) Patentinhaber: SIEMENS AKTIENGESELLSCHAFT, 80333 München (DE)
(72) Erfinder: GERBLINGER, Josef, Dr., 86152 Augsburg (DE); MEIXNER, Hans, Prof., 85540 Haar (DE)
(86) Internationale Anmeldenummer: EP9200223
(87) Internationale Veröffentlichungsnummer: WO9215101

(56) Entgegenhaltungen:
- EP-A- 0 245 092
- WO-A-89/03033
- DE-A- 3 603 757
- GB-A- 2 171 253
- PATENT ABSTRACTS OF JAPAN vol. 13, no. 92 (E-722)(3440) 3. März 1989 & JP,A,63 269 502 ( MATSUSHITA ELECTRIC ) 7. November 1988

## Beschreibung

Die vorliegende Erfindung betrifft einen schnellen Platinmetall-Temperatursensor für die Hochtemperatur-Sensorik, insbesondere zur Verwendung in der Kfz-Abgasüberwachungstechnik.

Für viele Anwendungen im Bereich der Hochtemperatursensorik (zum Beispiel emissionskontrollierte Verbrennung) werden Sensoren benötigt, die mit Zeitkonstanten kleiner als 100 ms die Temperaturen in ihrer Umgebung erfassen können. Im Bereich der Abgassensorik ist es zum Beispiel notwendig, die gasempfindlichen Elemente auf konstanter Temperatur von ca. 1000°C zu halten. Die Temperaturschwankungen des Abgases müssen möglichst schnell erfaßt werden, um die auf dem Sensorchip integrierten Heizelemente so steuern zu können, daß die Temperatur der gassensitiven Schicht nahezu konstant bleibt.

Für Einsatztemperaturen bis 1000°C wurden bisher Thermoelemente aus Platin/Platin-Rhodium oder Nickel/Chrom-Nickel verwendet. Diese Elemente haben jedoch zwei entscheidende Nachteile. Zum einen können sie nicht auf hybriden Bauelementen integriert werden und zum anderen weisen sie relativ große Ansprechzeiten auf Temperaturwechsel in ihrer Umgebung auf. Siebgedruckte oder in sonstigen Dünnschicht-Technologien (PVD- oder CVD-Verfahren) hergestellte Temperaturfühler aus Platinmetallen sind bisher nur bis maximal 850°C einsetzbar, da spätestens ab dieser Temperatur die Platinmetalle sowohl stabile als auch flüchtige Oxide ausbilden, die zu einem Widerstandsdriften des Temperatursensors führen.

Zum Schutz des Platinmetall-Temperatursensors vor der Oxidation und damit zur Verhinderung des Widerstandsdriftens des Sensors wird das Platinmetall mit verschiedenen Schutzschichten abgedeckt. Ein mit einer Aluminiumoxid-Schutzschicht versehener Platinmetall-Temperatursensor ist zum Beispiel aus der GB 2 171 253 bekannt.

Aus der JP-A 63269502 ist ein Platinwiderstandsfilm mit einer Siliziumnitrid-Schutzschicht bekannt.

Ein Platinschichtwiderstand mit einer Titandioxid/Siliziumdioxid-Doppelschicht ist der DE-OS 36 03 757 zu entnehmen.

Aus einem Artikel von J. C. Godefreuy et al in J. Vac. Sci. Technol. A 5 (5), 1987, Seiten 2917 bis 2923 ist ein Platindünnfilmtemperatursensor bekannt, der einen komplizierten Mehrschichtaufbau mit einer in Aluminiumoxid eingebetteten Platindünnschicht aufweist.

Nachteilig an den bekannten Sensoren ist, daß bei Temperaturen über 850°C trotz Passivierungs- und Schutzschichten eine Oxidation des Platins beobachtet wird, die zu dem unzulässigen Widerstandsdriften des Temperatursensors führt. Die Oxidation ist insbesondere auf Risse in den Passivierungsschichten zurückzuführen, die sich beim Abkühlen von hohen Temperaturen bis hin zur Raumtemperatur aufgrund von unterschiedlichen thermischen Ausdehnungskoeffizienten der für den Sensor verwendeten Materialien ausbilden.

Auch in Dickschichttechnik als Passivierungsschicht aufzubringende Glasschichten bilden beim Abkühlen Risse aus, die einen Sauerstoffzutritt und somit eine Oxidation des Platins erlauben.

Der vorliegenden Erfindung liegt die Aufgabe zugrunde, einen Platinmetall-Temperatursensor für einen Temperaturbereich bis zu 1000°C zu schaffen, der eine geringe Ansprechzeit hat, einen einfachen, leicht herstellbaren Aufbau aufweist und der auch bei Temperaturen über 850°C ein stabiles Meßverhalten ohne Widerstandsdriften besitzt.

Diese Aufgabe wird erfindungsgemäß gelöst durch einen schnellen Platinmetall-Temperatursensor mit den Merkmalen von Anspruch 1 oder Anspruch 2.

Weitere Ausgestaltungen der Erfindung sowie erfindungsgemäße Verwendungen des Temperatursensors sind den Unteransprüchen zu entnehmen.

Im folgenden wird die Erfindung im einzelnen beschrieben.

In Temperatursensoren wird eine Platin-Widerstandsschicht meist in Form von Mäandern in Dick- oder Dünnschichtverfahren auf die in der Mikrosystemtechnik üblicherweise verwendeten Substrate (zum Beispiel aus Al₂O₃) aufgebracht. Die Oxidation der Platinmetalle wird durch eine Passivierung, die auf die Oberfläche des Temperatursensors aufgebracht ist, unterbunden. Um trotz der Passivierung möglichst geringe Ansprechzeiten des Temperatursensors mit Zeitkonstanten kleiner als 100 ms zu erhalten, wird die Passivierungsschicht erfindungsgemäß als möglichst dünne Doppelschicht hergestellt (typische Schichtdicken im Bereich von 1 bis 15 µm).

Besonders geeignet für die Keramikschicht sind Verbindungen aus Metallen M mit Stickstoff N (Metallnitrid; z. B. Si₃N₄), Kohlenstoff C (Metallcarbid) oder Sauerstoff 0 (Metalloxid; z. B. Al₂O₃), Bor (Metallboriden), Silizium (Metallsilizide) oder Kombinationen aus Siliziden, Nitriden, Carbiden Boriden oder Oxiden.

Für die Glasschicht kommen beliebige Gläser in Betracht, beispielsweise Silikatgläser, die als Pasten für die Dickschicht-technik im Handel erhältlich sind.

Bei der erfindungsgemäßen Doppelschicht ist die Schichtreihenfolge von Keramik- und Glasschicht austauschbar, so daß direkt über der Platinwiderstandsschicht die Glasschicht oder die Keramikschicht aufgebracht sein kann.

Bei der Anordnung Platin/Glas/Keramik dient die Glasschicht als Pufferschicht, die bei höheren Temperaturen erweicht und so das Ausbilden von Spannungen zwischen der Keramikschicht und den darunterliegenden Schichten vermindert bzw. verhindert. Aufgrund der nicht auftretenden Spannungen werden trotz des hohen Temperaturintervalls beim Betrieb des Temperatursensors von Raumtemperatur bis 1000°C keine Risse in der Keramikschicht beobachtet.

Bei der Anordnung Platin/Keramik/Glas dient die Glasschicht als Dichtungsschicht, die ebenfalls bei höheren Temperaturen erweicht und dabei in sich eventuell bildende Risse der darunterliegenden Keramikschicht einzudringen vermag und diese dadurch abdichtet. Auch beim Abkühlen bleibt das Glas in aufgetretenen Spalten und Rissen der Keramikschicht haften und sorgt für eine sauerstoffdichte Passivierung durch diese Doppelschicht.

Auf diese Weise wird verhindert, daß Sauerstoff durch die Passivierung hindurch zur Oberfläche des Platinmetalls gelangt und sich zwischen dem Platinmetall und der Passivierung eine Metalloxidschicht ausbildet. Bei der Auswahl der Passivierung muß jedoch auch darauf geachtet werden, daß selbst bei den hohen Einsatztemperaturen bis 1000°C keine Reaktionen zwischen der Passivierung und dem als Temperatursensor verwendeten Platinmetall auftritt. Auch letzteres würde zu irreparablen Widerstandsdriften des Temperatursensors führen. Keine Gefahr von chemischen Reaktionen zwischen Widerstandsschicht und Passivierungsschicht besteht bei der direkten Anordnung der Glasschicht über der Platinschicht. Nur wenn die Platinschicht mit der Keramikschicht in Kontakt tritt, darf die Keramikschicht keinen Sauerstoff enthalten und dabei gleichzeitig ionenleitend sein. Es sind nur solche Oxide als Keramik erlaubt, die ausschließlich festgebundenen Sauerstoff enthalten, der nicht zur Platinoxidbildung geeignet ist.

Während die Glasschicht in einem Dickschichtverfahren erzeugt wird, beispielsweise durch Aufdrucken einer Glaspartikel enthaltenden Paste und anschließendes Einbrennen, kann die Keramikschicht sowohl in Dickschicht- als auch in Dünnschichttechnik hergestellt werden. Es kann zunächst eine Keramik-Grünfolie erzeugt und anschließend eingebrannt werden, oder man erzeugt die Keramik direkt durch ein Plasma- oder Gasphasenabscheideverfahren, beispielsweise durch PVD- oder CVD-Verfahren. Auch Sputter- und Aufdampfverfahren sind geeignet. Typische Schichtdicken für die Keramikschicht liegen zwischen 1 und 10 µm, während die Schichtdicke der Glasschicht zwischen 5 und 10 µm gewählt wird. Für die untere, direkt auf der Widerstandsschicht und dem Substrat aufliegende Teilschicht der Passivierungsschicht kann aufgrund einer unebenen Substratoberfläche, üblicherweise eine Keramik, eine höhere Schichtdicke erforderlich sein, um eine gleichmäßige und dichte Schicht zu gewährleisten.

Im Fall eines in Dickschicht-Technik hergestellten Platinmetall-Temperatursensors, bei dem zur Erzielung einer minimalen Ansprechzeit des Temperatursensors die erste Passivierungsteilschicht in Dünnschicht-Technik hergestellt ist, ergibt sich durch Auftragen einer Dichtungslage auf die Passivierungsschicht zur Abdichtung von nach dem Aufheizen und anschließendem Abkühlen zum Zwecke einer Temperung des Sensorrohlings entstandenen Rissen in der Passivierungsschicht praktisch eine in Dickschicht-Technik hergestellte Passivierungsschicht.

Die Keramikschicht ist aus einer Metall/Nichtmetall-Verbindung hergestellt, die keine Wechselwirkung mit Sauerstoff zeigt.

Außerdem ist die Keramikschicht aus einer Metall/Nichtmetall-Verbindung hergestellt, die undurchlässig für Sauerstoff ist.

Schließlich ist die erste (untere) Passivierungsschicht aus einer Metall/ Nichtmetall-Verbindung hergestellt, die keine Wechselwirkung mit Platinmetallen zeigt.

Mit der Erfindung wird erstmals ein schneller Temperatursensor zur Verfügung gestellt, der für Temperaturen bis 1000°C, insbesondere für das Intervall von 850 bis 1000°C geeignet ist, und der auch bei Einsatz in sauerstoffhaltiger Atmosphäre kein Widerstandsdriften zeigt und daher auch bei großer Lebensdauer sichere und zuverlässige Meßwerte liefert. Somit wird es erstmals möglich, Abgastemperaturen von Verbrennungskraftmaschinen unmittelbar hinter dem Verbrennungsraum zu messen, um mit dem erhaltenen Meßwert andere Gassensoren optimal zu steuern und damit eine optimale Verbrennung mit maximaler Energieausnutzung bei minimalem Schadstoffausstoß zu ermöglichen.

Im folgenden wird der Aufbau eines erfindungsgemäßen Temperatursensors durch zwei Figuren näher erläutert.
- Figur 1: zeigt die Anordnung einer Platinwiderstandsschicht auf einem Substrat während
- Figur 2: einen schematischen Schnitt durch einen fertigen Temperatursensor zeigt.

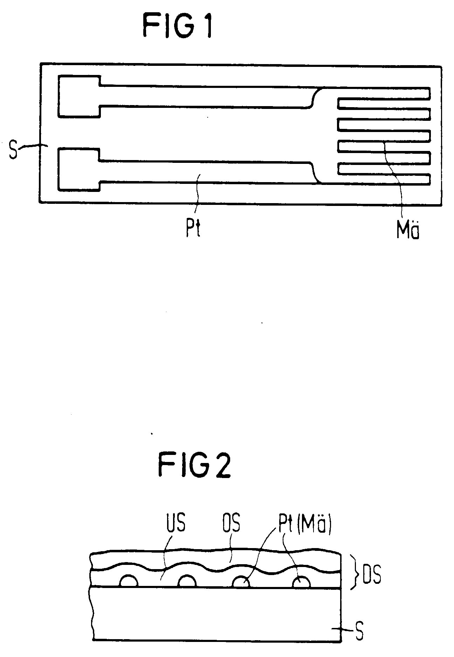

Figur 1: Auf einem Substrat S ist eine Platinwiderstandsschicht Pt in einer Stärke von zum Beispiel 5 µm aufgebracht. Zumindest teilweise weist die Platinstruktur Pt die Form von Mäandern Mä auf, die den eigentlichen Meßwiderstand bilden.

Figur 2 zeigt einen Schnitt durch einen fertigen Temperatursensor im Bereich der Mäanderstruktur Mä. Die auf dem zum Beispiel aus Aluminiumoxid bestehenden Substrat S aufgebrachten Platinleiterbahnen Pt werden von einer Doppelschicht DS als Passivierungsschicht abgedeckt. Dabei kann die untere Schicht US eine Glasschicht und die obere Schicht OS eine Keramikschicht sein oder umgekehrt.

## Patentansprüche

1. Schneller Platinmetall-Temperatursensor mit einer auf einem Keramiksubstrat (S) aufgebrachten Platinwiderstandsschicht (Pt, Mä), einer darüber angeordneten Glasschicht und einer über dieser angeordneten Keramikschicht, wobei die Glasschicht und die Keramikschicht eine Passivierungsschicht bilden.

2. Schneller Platinmetall-Temperatursensor mit einer auf einem Keramiksubstrat (S) aufgebrachten Platinwiderstandsschicht (Pt, Mä), einer darüber angeordneten Keramikschicht und einer über dieser angeordneten Glasschicht, wobei die Keramikschicht und die Glasschicht eine Passivierungsschicht bilden und wobei die Keramikschicht nicht gleichzeitig ionenleitend ist und Sauerstoff enthält.

3. Temperatursensor nach Anspruch 1 oder 2, bei dem die Glasschicht in Dickschichttechnik hergestellt ist.

4. Temperatursensor nach Anspruch 1, 2 oder 3, bei dem das Material der Keramikschicht aus der Klasse der Nitride, Boride, Carbide, Oxide oder Silizide von Metallen gewählt ist.

5. Temperatursensor nach einem der Ansprüche 1 bis 4, bei dem die Glasschicht aus Silikatglas besteht.

6. Temperatursensor nach einem der Ansprüche 1 bis 5, bei dem die Keramikschicht in Dick- oder Dünnschichttechnik ausgeführt ist und eine Dicke von ca. 1 bis 10 µm aufweist.

7. Temperatursensor nach einem der Ansprüche 1 bis 6, bei dem die Dicke der Keramikschicht 1 bis 10 µm beträgt.

8. Verwendung des Temperatursensors nach einem der vorangegangenen Ansprüche zur Temperaturmessung bis 1000°C, insbesondere im Bereich von 850 bis 1000°C.

9. Verwendung eines Temperatursenors nach einem der Ansprüche 1 bis 7 in der Kfz-Technik zur Abgasüberwachung.

## Claims

1. Rapid temperature sensor made of metal of the platinum group having a platinum resistive layer (Pt, Mä) applied to a ceramic substrate (S), a glass layer arranged on top thereof and a ceramic layer arranged on top of the latter, the glass layer and the ceramic layer forming a passivation layer.

2. Rapid temperature sensor made of metal of the platinum group having a platinum resistive layer (Pt, Mä) applied to a ceramic substrate (S), a ceramic layer arranged on top thereof and a glass layer arranged on top of the latter, the ceramic layer and the glass layer forming a passivation layer and the ceramic layer not simultaneously conducting ions and containing oxygen.

3. Temperature sensor according to Claim 1 or 2, wherein the glass layer is produced using thick-film technology.

4. Temperature sensor according to Claim 1, 2 or 3, wherein the material of the ceramic layer is selected from the class comprising the nitrides, borides, carbides, oxides or silicides of metals.

5. Temperature sensor according to one of Claims 1 to 4, wherein the glass layer comprises silicate glass.

6. Temperature sensor according to one of Claims 1 to 5, wherein the ceramic layer is formed using thick- or thin-film technology and has a thickness of approximately 1 to 10 µm.

7. Temperature sensor according to one of Claims 1 to 6, wherein the thickness of the ceramic layer is 1 to 10 µm.

8. Use of the temperature sensor according to one of the preceding claims for measuring temperatures up to 1,000°C, in particular in the range from 850 to 1,000°C.

9. Use of a temperature sensor according to one of Claims 1 to 7 in motor-vehicle technology for exhaust-gas monitoring.

## Revendications

1. Capteur de température rapide en métal du groupe du platine avec une couche résistive en platine (Pt, Mä) appliquée sur un substrat en céramique (S), une couche de verre superposée et une couche de céramique disposée sur cette dernière, la couche de verre et la couche de céramique formant une couche de passivation.

2. Capteur de température rapide en métal du groupe du platine avec une couche résistive en platine (Pt, Mä) appliquée sur un substrat en céramique (S), une couche de céramique superposée et une couche de verre disposée sur cette dernière, la couche de céramique et la couche de verre formant une couche de passivation et la couche de céramique n'étant pas simultanément conductrice d'ions et pourvue d'oxygène.

3. Capteur de température selon la revendication 1 ou 2, dans lequel la couche de verre est fabriquée par la technique des couches épaisses.

4. Capteur de température selon la revendication 1, 2 ou 3, dans lequel le matériau de la couche de céramique est choisi dans la classe des nitrures, des borures, des carbures, des oxydes ou des siliciures de métaux.

5. Capteur de température selon l'une des revendications 1 à 4, dans lequel la couche de verre est constituée de verre silicaté.

6. Capteur de température selon l'une des revendications 1 à 5, dans lequel la couche de céramique est réalisée par la technique des couches minces ou des couches épaisses et présente une épaisseur d'environ 1 à 10 µm.

7. Capteur de température selon l'une des revendications 1 à 6, dans lequel l'épaisseur de la couche de céramique vaut 1 à 10 µm.

8. Utilisation du capteur de température selon l'une des revendications précédentes pour la mesure de températures jusqu'à 1.000°C, en particulier dans la gamme de 850 à 1.000 °C.

9. Utilisation d'un capteur de température selon l'une des revendications 1 à 7 dans le domaine automobile pour le contrôle des gaz d'échappement.
